# EUROPÄISCHE PATENTSCHRIFT

(11) **EP 4 008 979 B1**
(45) Veröffentlichungstag und Bekanntmachung des Hinweises auf die Patenterteilung: **21.05.2025**
(21) Anmeldenummer: 20211245.4
(22) Anmeldetag: 02.12.2020
(51) Int. Cl.: F25B 1/00, F24F 11/36, F24F 13/20, F24F 13/24, F25B 25/00, F25B 43/00, F25B 49/00

(54) **VORRICHTUNG ZUR SICHEREN DURCHFÜHRUNG EINES LINKSDREHENDEN THERMODYNAMISCHEN KREISPROZESSES**
DEVICE FOR SAFELY CARRYING OUT A LEFT-TURNING THERMODYNAMIC CYCLE
DISPOSITIF POUR EFFECTUER EN TOUTE SÉCURITÉ UN CYCLE THERMODYNAMIQUE DU SENS ANTI-HORAIRE

(43) Veröffentlichungstag der Anmeldung: 08.06.2022
(73) Patentinhaber: Vaillant GmbH, 42859 Remscheid (DE)
(72) Erfinder: Lingk, Tobias, 42799 Leichlingen (DE); Krampe-Zadler, Christof, 44628 Herne (DE); Spahn, Hans-Josef, 40699 Erkrath (DE)
(74) Vertreter: Popp, Carsten

(56) Entgegenhaltungen:
- EP-A1- 3 693 683
- CN-A- 106 679 238
- CN-A- 110 285 495
- JP-A- 2002 058 950

## Beschreibung

Die Erfindung betrifft eine Vorrichtung zur sicheren Durchführung eines linksdrehenden thermodynamischen Kreisprozesses mittels eines entzündlichen Arbeitsfluids, welches in einem geschlossenen, hermetisch dichten Arbeitsfluidumlauf geführt wird. Ein Beispiel für einen solchen Kreisprozess, der in einem Kältekreis einsetzbar ist, ist der Clausius-Rankine-Kreisprozess. Vorwiegend sind dies Wärmepumpen, Klimaanlagen und Kühlgeräte, wie sie in Wohngebäuden gebräuchlich sind. Unter Wohngebäuden werden dabei Privathäuser, Miethauskomplexe, Krankenhäuser, Hotelanlagen, Gastronomie und kombinierte Wohn- und Geschäftshäuser verstanden, in denen Menschen dauerhaft leben und arbeiten, im Unterschied zu mobilen Vorrichtungen wie KFZ-Klimaanlagen oder Transportboxen, oder auch Industrieanlagen oder medizintechnischen Geräten. Gemeinsam ist diesen Kreisprozessen, dass sie unter Einsatz von Energie Nutzwärme oder Nutzkälte erzeugen und Wärmeverschiebungssysteme bilden.

Die zum Einsatz kommenden thermodynamischen Kreisprozesse sind seit langem bekannt, ebenso die Sicherheitsprobleme, die bei der Verwendung geeigneter Arbeitsfluide entstehen können. Abgesehen von Wasser sind die bekanntesten damaligen Arbeitsfluide brennbar und giftig. Sie führten im vergangenen Jahrhundert zur Entwicklung der Sicherheitskältemittel, die aus fluorierten Kohlenwasserstoffen bestanden. Es zeigte sich jedoch, dass diese Sicherheitskältemittel die Ozonschicht schädigen, zur Klimaerwärmung führen, und dass ihre sicherheitstechnische Unbedenklichkeit zu konstruktiven Unachtsamkeiten führte. Bis zu 70 % des Umsatzes entfiel auf den Nachfüllbedarf undichter Anlagen und deren Leckageverluste, der hingenommen wurde, solange dies im Einzelfall als wirtschaftlich vertretbar empfunden wurde und Bedarf an Ersatzbeschaffung förderte.

Der Einsatz dieser Kältemittel wurde aus diesem Grund Restriktionen unterworfen, in der Europäischen Union beispielsweise durch die F-Gas-Verordnung (EU) 517/2014.

Es ist daher einerseits äußerst problematisch, die konstruktiven Prinzipien für Kältemittel-führende thermodynamische Prozesse zu übernehmen, die sich bei Sicherheitskältemitteln scheinbar gut bewährt haben, andererseits auf die Anlagenkonzepte aus der Zeit vor Einführung der Sicherheitskältemittel aufzusetzen. Dies liegt auch daran, dass inzwischen aus Einzelgeräten komplexe Anlagen geworden sind, was die Anzahl der Möglichkeiten für Störungen und deren Folgen vervielfältigt hat. Hierdurch ergeben sich beispielhaft die folgenden Anforderungen an das Sicherheitskonzept:
- Im Normalbetrieb muss die Anlage absolut dicht sein.
- Weder bei einer Leckage im Kondensator bzw. Verflüssiger noch bei einer Leckage im Verdampfer darf Arbeitsfluid in den gekoppelten Nutzwärme- oder Nutzkältekreislauf gelangen.
- Es darf kein Arbeitsfluid aus dem Kältekreislauf unbemerkt entweichen können.
- Im Verdichter darf das Arbeitsfluid nicht durch die Lagerung entweichen.
- Im Entspannungssystem darf das Arbeitsfluid nicht durch den Ventilsitz diffundieren oder durch Kavitation zu Leckagen führen.
- Gekapselte Teile müssen für Wartungs- und Kontrollzwecke zugänglich bleiben.
- In Notfällen dürfen sich keine Gefahren einstellen.
- Die Anlage soll in vorhandene Räumlichkeiten integrierbar sein
- Das Kältemittel soll abgelassen und eingefüllt werden können.

Der Begriff des Notfalls muss weit gesehen werden. Denkbar sind Stromausfälle, Erdbeben, Erdrutsche, Überschwemmungen, Brände, technische Fehler und klimatische Extrembedingungen. Sofern die Anlagen in einem Netzwerk betrieben werden, ist auch ein Netzausfall oder eine Netzstörung als Notfall anzusehen. Gegenüber solchen Gefahren oder Störungen soll die Vorrichtung inhärent sicher sein. Aber auch ein Ausfall der verfügbaren Primärenergie kann einen Notfall begründen und darf keine Gefahrentwicklung zur Folge haben. Alle diese Notfälle können auch kombiniert auftreten.

Hierbei sind die verschiedenen Bauformen und Anwendungsfälle für derartige thermodynamische Kreisprozesse gesondert zu berücksichtigen, bei ortsfesten Anlagen für Wohngebäude beispielsweise folgende:
- Haushaltskühlschränke,
- Haushaltsgefrierschränke,
- Haushaltstrockner,
- Haushaltskühl-Gefrierkombinationen,
- Kühlkammern für Hotel- und Gastronomie,
- Gefrierkammern für Hotel- und Gastronomie,
- Klimaanlage für Haus, Hotel- und Gastronomie,
- Warmwassererzeugung für Haus, Hotel- und Gastronomie,
- Beheizung für Haus, Hotel- und Gastronomie,
- Sauna-Schwimmbadanlagen für Haus, Hotel- und Gastronomie,
- Kombinierte Anlagen für die oben genannten Anwendungen,
wobei diese Aufzählung nicht vollständig ist.

Die Energie für den Betrieb der Anlagen einschließlich der zu verschiebenden Wärmeenergie kann aus verschiedenen Quellen stammen:
- Erdwärme aus Erdwärmespeichern,
- Geothermische Wärme,
- Fernwärme,
- Elektrische Energie aus allgemeiner Stromversorgung,
- Elektrische Solarenergie,
- Solarwärme,
- Abwärme,
- Warmwasserspeicher,
- Eisspeicher,
- Latentwärmespeicher,
- Fossile Energieträger wie Erdgas, Erdöl, Kohle,
- Nachwachsende Rohstoffe wie Holz, Pellets, Biogas,
- Außenluft,
- Kombinationen aus den oben genannten Energiequellen,
wobei auch diese Aufzählung nicht vollständig ist.

Die auftretenden Probleme bei der Sicherheitsauslegung solcher Anlagen werden in der WO 2015/032905 A1 anschaulich beschrieben. So liegt die untere Zündgrenze von Propan als Arbeitsfluid etwa bei 1,7 Volumenprozent in Luft, was 38 g/m³ in Luft entspricht. Sofern der Kälteprozess in einem ihn umgebenden, hermetisch abgeschlossenen, ansonsten aber luftgefüllten Raum mit dem Arbeitsfluid Propan durchgeführt wird, stellt sich das Problem der Erkennung einer kritischen, explosiven Situation nach einer Störung, bei der das Arbeitsfluid in diesen hermetisch abgeschlossenen Raum austritt. Elektrische Sensoren zur Erkennung kritischer Konzentrationen sind nur schwierig explosionsgeschützt auszuführen, weswegen gerade die Propan-Erkennung durch die Sensoren selbst das Explosionsrisiko erheblich verschärft, ausgenommen hiervon sind Infrarotsensoren. Propan ist auch giftig, bei Inhalation oberhalb einer Konzentration von ca. 2 g/m³ stellen sich narkotische Effekte, Kopfschmerzen und Übelkeit ein. Dies betrifft Personen, die ein erkanntes Problem vor Ort lösen sollen, noch bevor Explosionsgefahr entsteht.

Propan ist auch schwerer als Luft, sinkt also in ruhender Luft auf den Boden und sammelt sich dort an. Sollte sich also ein Teil des Propans in einer strömungsarmen Zone des abgeschlossenen Raums, in dem sich das gestörte Aggregat befindet, sammeln, können die lokalen Explosionsgrenzen wesentlich schneller erreicht werden, als es der Quotient aus Gesamtraumvolumen zu ausgetretener Propanmenge erwarten lässt. Die WO 2015/032905 A1 sucht dieses Problem zu lösen, indem ein Generator für elektrischen Strom in die Öffnung bzw. deren Verriegelung dieses Raums integriert wird und bei deren Betätigung in einem ersten Schritt die elektrische Energie erzeugt und bereitstellt, mit der der Sensor aktiviert wird, und der im Alarmfall die Verriegelung dann nicht freigibt, sondern eine Lüftung des abgeschlossenen Raums veranlasst, und erst in einem zweiten Schritt eine Entriegelung und Öffnung zulässt.

Die DE 10 2011 116 863 A1 beschreibt ein Verfahren zur Sicherung einer Vorrichtung für einen thermodynamischen Kreisprozess, welche mit einem Prozessfluid betrieben wird, das mindesten eine umweltgefährliche, giftige und/oder entzündliche Substanz enthält oder daraus besteht. Im Falle einer Leckage in der Vorrichtung für einen thermodynamischen Kreisprozess ein Adsorptionsmittel mit dem Prozessfluid, insbesondere Ammoniak, Propan oder Propen, in Kontakt gebracht und die Substanz durch das Adsorptionsmittel selektiv gebunden. Das Adsorptionsmittel wird nach Gebrauch regeneriert. Als Adsorptionsmittel werden Zeolith, auch in Kombination mit Imidazol oder Phosphaten, ferner CuBTC vorgeschlagen, das Adsorptionsmittel kann in Form einer Schüttung, eines Formkörpers, eines Anstrichs, eines Sprühfilms oder einer Beschichtung ausgestattet sein. Die Trägerstruktur des Formkörpers kann aus Mikrostruktur, Lamellenstruktur, Rohrbündel, Rohrregister und Blech bestehen und muss mechanisch stabil sowie stark oberflächenvergrößernd sein. Eine Umwälzung der potenziell kontaminierten Luft erfolgt üblicherweise kontinuierlich, kann aber auch durch einen Sensor initiiert werden, der die Lüftung nach Erreichen eines Schwellenwerts oder bei einem erkannten Havariefall einschaltet. Die Adsorption kann innerhalb oder außerhalb eines geschlossenen Raumes durchgeführt werden.

Die DE 195 25 064 C1 beschreibt eine Kältemaschine mit einem gasdicht ausgebildeten Gehäuse, welches alle kältemittelführenden Komponenten der Maschine aufnimmt, ein das Innere des gasdichten Gehäuses mit einem Auslass verbindender Raum vorgesehen ist, und der Raum mit einem das Kältemittel sorbierenden Stoff gefüllt ist. Die Menge des sorbierenden Stoffes wird dabei so dimensioniert, dass die gesamte Menge an eventuell austretendem Kältemittel aufgenommen und von der Umwelt ferngehalten werden kann. Der mit dem sorbierenden Stoff gefüllte Raum ist zur Umgebung hin offen. Bei Kältemitteln, die schwerer als Luft sind, ist der Raum nach unten hin offen, bei solchen, die leichter sind, ist er nach oben hin offen, so dass ein Fördergebläse nicht erforderlich ist. Das Sorptionsmittel wird in das Gehäuse eingebracht und umschließt die Kältemaschine bzw. die kältemittelführenden Einrichtungen vollständig. Auf seinem Weg nach außen sind Schikanen vorgesehen, die Kurzschlussströmungen verhindern und entweichendes Gas durch das Sorptionsmittel zwingen. Auch eine doppelwandige Ausführungsform, bei der das Sorptionsmittel im Doppelmantel angeordnet ist, ist möglich. Am Ausgang des mit dem sorbierenden Stoffes gefüllten Raumes zur Umgebung hin kann eine Messeinrichtung für Kältemittel vorgesehen werden.

Die EP 3 106 780 A1 beschreibt eine Wärmepumpenanlage, die in einem mit einem Bindemittel ausgekleideten, luftdichten Gehäuse untergebracht ist. Innerhalb dieses Gehäuses kann eine Adsorptionseinheit mit einer Zwangslüftung angeordnet sein, die im Umluftbetrieb die Luft im Gehäuse reinigt. Dieser Umluftbetrieb kann kontinuierlich oder nur im Störfall oder in regelmäßigen Intervallen erfolgen. Stromab dieser Sorptionsstufe kann auch ein Zündbrenner, eine Pilotflamme, ein katalytischer Brenner oder ein Heizdraht angeordnet sein, der ggf. restliche brennbare Verunreinigungen verbrennt. Ebenfalls denkbar ist eine Frischluftzufuhr in Verbindung mit der Ableitung gereinigter Abluft.

Die vorgestellten Systeme hatten am Markt bislang nur wenig Erfolg. Dies kann auf die folgenden Gründe zurückgeführt werden:
- Montagefreundlichkeit: Im Falle von Modernisierungen von alten Heizungsanlagen müssen die neu zu installierenden Vorrichtungen zerlegbar und transportabel sein. Beispielsweise müssen sie über Kellertreppen und in verwinkelte und niedrige Kellerräume verbracht werden können. Zusammenbau, Inbetriebnahme und Wartung müssen ohne großen Aufwand vor Ort möglich sein. Dies schließt große und schwere Druckbehälter weitgehend aus, ferner Systeme, die nach einer Havarie nicht mehr demontierbar sind.
- Diagnosefreundlichkeit: Die Betriebszustände sollten von außen gut erkennbar sein, dies betrifft die Sichtbarkeit und Prüfbarkeit bezüglich möglicher Leckagen und schließt den Füllstand des Arbeitsfluids sowie den Befüllungsgrad ggf. eingebrachter Sorbenzien ein.
- Wartungsfreundlichkeit: Systemdiagnosen sollten ohne großen zusätzlichen Aufwand erfolgen können. Sicherheitsrelevante Systeme sollten regelmäßig getestet bzw. auf ihre Zuverlässigkeit geprüft werden können. Sofern Systemdiagnosen nicht einfach durchführbar sind, sollten möglicherweise belastete Teile leicht durch Neuteile austauschbar sein.
- Ausfallsicherheit: Die Systeme sollen einerseits gegen Störungen gesichert sein, gleichzeitig aber zuverlässig laufen können, wenigstens im Notbetrieb. Im Falle einer vorübergehenden externen Störung sollten die Systeme entweder selbstständig wieder anfahren oder ohne großen Aufwand wiederangefahren werden können.
- Energieeffizienz: Die Anlagen sollen energetisch günstig betrieben werden können, ein hoher Eigenverbrauch an Energie für Sicherheitsmaßnahmen wirkt dem entgegen.
- Robustheit: Im Falle größerer Störungen, seien sie extern oder systemintern aufgeprägt, muss die Beherrschbarkeit gewährleistet sein, dies betrifft z.B. Lüftungssysteme, die verstopfen können oder Druckbehälter, die unter Druck stehen oder heiß werden, etwa bei einem Brand.
- Die Einrichtungen sollen möglichst leise sein.
- Kosten: Die Sicherheitsmaßnahmen sollen weder bei den Anschaffungskosten noch bei den laufenden Kosten bedeutend sein und die Einsparungen bei den Energiekosten gegenüber herkömmlichen Systemen übersteigen. Sie sollen günstig sein.

Die DE 195 25 064 C1 beschreibt eine Kältemaschine mit einem Gehäuse, welches die Kältemittel führenden Komponenten der Maschine aufnimmt, wobei das Gehäuse zwar gasdicht ausgebildet ist, aber ein das Innere des gasdichten Gehäuses mit einem Auslass verbindender Raum vorgesehen ist und der Raum mit einem das Kältemittel adsorbierenden Stoff gefüllt ist. Der Raum kann auch ein nach außen offener Kanal sein und Schikanen enthalten.

Problematisch ist hierbei aber, dass die Geräusche, die von der Maschine verursacht werden, durch den Raum bzw. den Kanal ungehindert nach außen dringen können, was durch das geschlossene Gehäuse ansonsten verhindert würde, wenn es gasdicht wäre. Zwar können Schikanen in luftführenden Kanälen ebenfalls verhindern, dass sich Luftschall ausbreitet, was aus der Klima-Lüftungstechnik und im Abgasstrang im Bau von Verbrennungs-Kraftfahrzeugen bekannt ist, aber diese können dann nicht mit Kältemittel sorbierenden Stoffen gefüllt werden. Hierdurch entsteht ein Zielkonflikt. Es bedarf also schalldämmender oder Schall absorbierender Maßnahmen, die beim Durchströmen möglichst wenig Druckverlust verursachen.

Die Aufgabe der Erfindung ist daher, eine verbesserte Vorrichtung bereitzustellen, welche günstig, sicher und leise ist.

Die Erfindung löst diese Aufgabe durch eine Vorrichtung, wie sie durch den angehängten unabhängigen Anspruch 1 definiert wird. Es handelt sich dabei um eine Vorrichtung zur sicheren Durchführung eines linksdrehenden thermodynamischen Kreisprozesses mittels eines entzündlichen Arbeitsfluids, welches in einem geschlossenen, hermetisch dichten Arbeitsfluidumlauf geführt wird, unter anderem aufweisend
- mindestens einen Verdichter für Arbeitsfluid,
- mindestens eine Entspannungseinrichtung für Arbeitsfluid,
- mindestens zwei Wärmeübertrager für Arbeitsfluid mit jeweils mindestens zwei Anschlüssen für Wärmeüberträgerfluide,
- ein inneres Gehäuse, welches alle am geschlossenen Arbeitsfluidumlauf angeschlossenen Einrichtungen umfasst und weitere Einrichtungen umfassen kann,
- mindestens einen Außen-Adsorber, der direkt an das innere Gehäuse anschließt und mindestens eine Seite des inneren Gehäuses abdeckt und mit ihr verbunden ist,
- der Außen-Adsorber eine unverschließbare Austrittsöffnung für Gas aufweist,
- das innere Gehäuse mindestens eine Öffnung aufweist für Gas sowie im Anschluss an diese Öffnung einen Einströmbereich für Gas in den Außen-Adsorber, und
- der Außen-Adsorber sowohl ein Gasadsorbens für durchströmendes, entzündliches Gas mit Arbeitsfluid als auch mindestens ein Lärmabsorbens für Körperschall- und Luftschall aufweist.

Als linksdrehender Kreisprozess dient in den meisten Fällen ein Clausius-Rankine-Prozess, der mit R290 betrieben wird. Als Wärmeübertragerfluide sind hier alle gasförmigen oder flüssigen Medien zu verstehen, mit denen Wärme übertragen wird, also etwa Luft, Wasser, Sole, Wärmeträgeröle oder dergleichen. Eine ähnliche Technologie wird durch die EP 3 693 683 A1 beschrieben, jedoch ohne zusätzliche Maßnahmen zur Schalldämmung. Die EP 3 693 683 A1 stellt den nächstliegenden Stand der Technik für die vorliegende Erfindung dar. Technisch weiter entfernter Stand der Technik findet sich auch in der JP 2002 058950 A, der CN 110 285 495 A und der CN 106 679 238 A.

Die Funktion der Erfindung ist dabei, dass auf die übliche Schallisolierung des Gehäuses größtenteils verzichtet werden kann, wenn diese Schallisolierung in diejenige Vorrichtung integriert wird, die der Abfuhr von leckagebedingten Kontaminationen dient. Sofern diese Vorrichtung nämlich zur Umgebung hin offen ausgeführt ist, kann auch Schall grundsätzlich ungehindert nach außen dringen und die Adsorption von leckagebedingter Kontamination der im Innenraum des Gehäuses befindlichen und aufgrund des damit verbundenen Druckanstiegs der herausdrängenden Luft erfolgt vorteilhafter Weise gemeinsam und aufeinander abgestimmt.

Damit wird erreicht, dass weder Arbeitsfluid noch Lärm nach außen dringen kann, obwohl das Gehäuse für Gas durchlässig ist. Der Außen-Adsorber der Erfindung adsorbiert also Arbeitsfluid aus dem Gas und absorbiert gleichzeitig den Schall. Bezüglich des absorbierten Schalls werden sowohl Körperschall als auch Luftschall absorbiert. Die Absorptionsvorrichtung für Schall wird nachfolgend näher beschrieben.

Weiterhin wird im Rahmen der vorliegenden Erfindung vorgesehen, dass
- der Außen-Adsorber eine Adsorbensschüttung als Gasadsorbens, mindestens eine weiche Schwerbodenmatte als Schüttungsbegrenzung und mindestens eine Schalldämmschicht zwischen dem Gehäuse aufweist.
- die Adsorbensschüttung auf zwei Seiten je eine weiche Schwerbodenmatte als Schüttungsbegrenzung aufweist.
- die Adsorbensschüttung aus Kugeln oder Pellets gebildet ist und die weiche Schwerbodenmatte so weich ist, dass sich die Kugeln oder Pellets in die Schwerbodenmatte eindrücken können.

In Ausgestaltungen der Erfindung ist vorgesehen, dass
- die weiche Schwerbodenmatte ein Eindrücken der Kugeln oder Pellets der Adsorbensschüttung von mehr als dem halben Partikeldurchmesser zulässt,
- die weiche Schwerbodenmatte aus Silikon besteht.

Schwerbodenmatten sind im Stand der Technik seit langem unter einer Reihe von Namen bekannt. Üblich sind Begriffe wie "Schwermatte", "Schwerschichtmatte", "heavy mat", "Akustikschaumstoff" und "Entdröhnmatte" sowie zahlreiche weitere. Im Handel werden sie beispielsweise als "Antidröhnmatte" und "Schallschutzmatte selbstklebend" vertrieben. Im Haushaltsgerätebau ist beispielsweise die DE 10 2011 116 809 A1 bekannt, die eine solche Entdröhnmatte aufweist und beschreibt. Im Automobilbau ist beispielsweise die DE 199 02 222 A1 bekannt, bei der ein schallisolierender Bodenbelag verwendet wird, bei der ein akustisches Doppelwandsystem zwischen dem Teppich und dem Boden des Fahrzeuginnenraums erklärt wird. Hierbei wird die Schwerbodenmatte als "Versteifungsschicht 8" beschrieben. Grundlegend beschrieben ist die Technologie in der EP 733 004 B1, bei der die Matten als "Schwerschichten 7, 8, 9" bezeichnet werden. Ebenfalls beschrieben wird das Prinzip in der GB 2 213 097 B, dort wird die Schwerbodenmatte als "intermediate sheet 2" beschrieben.

Im Normalfall wird die Adsorbensschüttung nicht von Gas durchströmt, wenn keine Leckage auftritt. Das unterscheidet sie von Filtertechnologie von Klimaanlagen, wie sie die EP 532 874 B1 beschreibt für eine Klimaanlage für Wohnräume, bei dem zwischen dem Gebläse und dem Auslass ein Filter vorgesehen ist. Die Klimaanlage kann auch eine Wärmepumpenfunktion aufweisen, das Gebläse erzeugt störende Geräusche im Frequenzbereich von 125 bis 250 Hz. Zur Schalldämmung werden Umlenkungen und unter anderem Sorptionsfilter verwendet, wobei die Sorptionsfilter einen Träger für die sorbierenden Substanzen aufweist, vorgeschlagen werden offenporige Schaumstoffe, auch als Schüttung.

Lediglich kleine Gasströmungen treten auf, wenn Luftdruckschwankungen am Aufstellungsort des Gehäuses einen Druckausgleich zwischen dem Innenraum und der Umgebung erfordern. Allerdings bewirken die Schwingungen der verbauten Apparate, dass sowohl Körperschall als auch Luftschall an die Gehäusewände als auch an das Gas, in der Regel Luft, im Innenraum übertragen werden. Dies wird bei herkömmlichen Bauformen meist durch Dämmmaterial in Form von Auskleidungen und Matten aus Dämmstoffen gedämpft. Einige dieser üblicherweise verwendeten Materialien sind brennbar oder auch löslich in Kohlenwasserstoffen, weswegen hier besondere Vorkehrungen getroffen werden müssen, wenn brennbare oder entzündliche Arbeitsfluide, etwa aus Kohlenwasserstoffen wie etwa R290, zum Einsatz gebracht werden sollen.

Auf diese Maßnahmen innerhalb des Gehäuses kann verzichtet werden, wenn die Schallschutzmaßnahmen alle auf der Außenseite des inneren Gehäuses erfolgen. Diesen Zweck erfüllen die Schwerbodenmatten, die vorzugsweise aus Silikon gefertigt werden, je nach Arbeitsfluid wird beispielsweise das Material Fluorsilikon verwendet. Die Silikonmatten sollten dabei mehrere Millimeter stark sein, z.B. 3 Millimeter, und dabei sehr weich, Shore-A-Härten zwischen 10 und 60 kommen hierbei bevorzugt zur Anwendung. Diese Silikonmatten kommen in direkten Kontakt mir den Partikeln der Adsorbensschüttung, die vorzugsweise aus Pellets oder Kugeln besteht. Hierbei drücken sich die Partikel elastisch-plastisch in die Weichbodenmatten ein, durch die Vibrationen im Betrieb ergibt sich auf diese Weise ein Schüttungskörper, mit quasi-festen Eigenschaften, bei dem im Falle einer Durchströmung keine Randgängigkeit auftritt. Dieses Fehlen der Randgängigkeit bewirkt auch, dass Schallwellen an der die Adsorberschüttung begrenzenden Wände nicht reflektiert werden und sich keine Gaskanäle bilden, die Luftschallwellen ungehindert passieren können.

Durch die Schwerbodenmatten wird ferner das Gewicht der Gehäusebleche, die aus Metall oder Kunststoff sein können, entsprechend erhöht, was die Weiterleitung von Körperschall ebenfalls erheblich dämmt.

Diese Körperschalldämmung kann noch erheblich verbessert werden, wenn das Dämmmaterial, welches nach dem herkömmlichen Stand der Technik im Inneren des inneren Gehäuses eingesetzt wird, auf der Außenseite des inneren Gehäuses angebracht und mit der Schwerbodenmatte verbunden wird. Die besten Dämmergebnisse werden dann erreicht, wenn das Dämmmaterial aus elastischen Materialien besteht, deren Resonanzfrequenz derjenigen des Verdichters entspricht. Auf diese Weise werden die größten Schwingungsamplituden erreicht und die innere Dämpfungswirkung des Dämmmaterials ist dann am größten.

Besonders vorteilhaft ist es wenn der Außen-Adsorber gebildet wird aus einer ersten Dämmschicht, die direkt am inneren Gehäuse anliegt, nachfolgend einer Schwerbodenmatte, nachfolgend einer Adsorbensschüttung, nachfolgend einer weiteren Schwerbodenmatte, nachfolgend einer weiteren Dämmschicht und nachfolgend einer äußeren Gehäusewand. Die Summe der beiden Dämmschichten kann dann gleich groß oder sogar kleiner sein als die Dämmschicht nach herkömmlichem Stand der Technik.

Je nach Aufstellung kann nur eine Seite des Gehäuses oder mehrere oder alle Seiten des Gehäuses mit einem derartigen Außen-Adsorber versehen werden. Steht das Gehäuse direkt an einer Wand oder in einer Ecke, kann die Dämmung an der Wand entfallen, auch ist es oft schwierig, die Freiheit des Gasweges im Falle von Leckagen sicherzustellen oder einen Wechsel des Adsorptionsmaterials im Falle einer Beladung vorzunehmen, wenn das Gerät direkt an einer Wand oder in einer Ecke steht. Bei frei stehenden Geräten kann an jeder der Seiten ein Außen-Adsorber vorgesehen werden, der dann entsprechend schmaler ausgeführt werden kann.

In den meisten Fällen wird die Adsorbensschüttung von unten nach oben durchströmt, der Einströmbereich aus dem Inneren des inneren Gehäuses befindet sich dann unten und die Adsorbensschüttung wird unten durch ein Sieb gehalten. Eine obere Abdeckung ist nicht erforderlich. Eine Anordnung mit einem Einströmbereich oben und einem Ausströmbereich unten ist aber ebenfalls möglich.

die Adsorbensschüttung muss auf die Adsorptionsfähigkeit bezüglich des zu adsorbierenden Arbeitsfluids abgestimmt werden. Bei Verwendung des Arbeitsfluids R290 wird vorteilhaft Aktivkohle verwendet. Hierbei sollten die Kugeln oder Pellets der Adsorbensschüttung einen Durchmesserbereich von 0,5 bis 10 Millimeter und ein Länge-zu-Durchmesserverhältnis von 1 bis 20 aufweisen. Optimal sind Kugeln oder zylinderförmige Pellets mit 4 bis 6 Millimeter Durchmesser, diese drücken sich in idealer Weise in die weichen Schwerbodenmatten aus Silikon ein.

Die Erfindung wird nachfolgend anhand von Prinzipskizzen näher erläutert. Hierbei zeigen:
Fig. 1 eine Wärmepumpe mit Außen-Adsorber,
Fig. 2 einen erfindungsgemäßen Außen-Adsorber im Seitenschnitt,
Fig. 3 eine Draufsicht auf eine Außen-Adsorberanordnung.

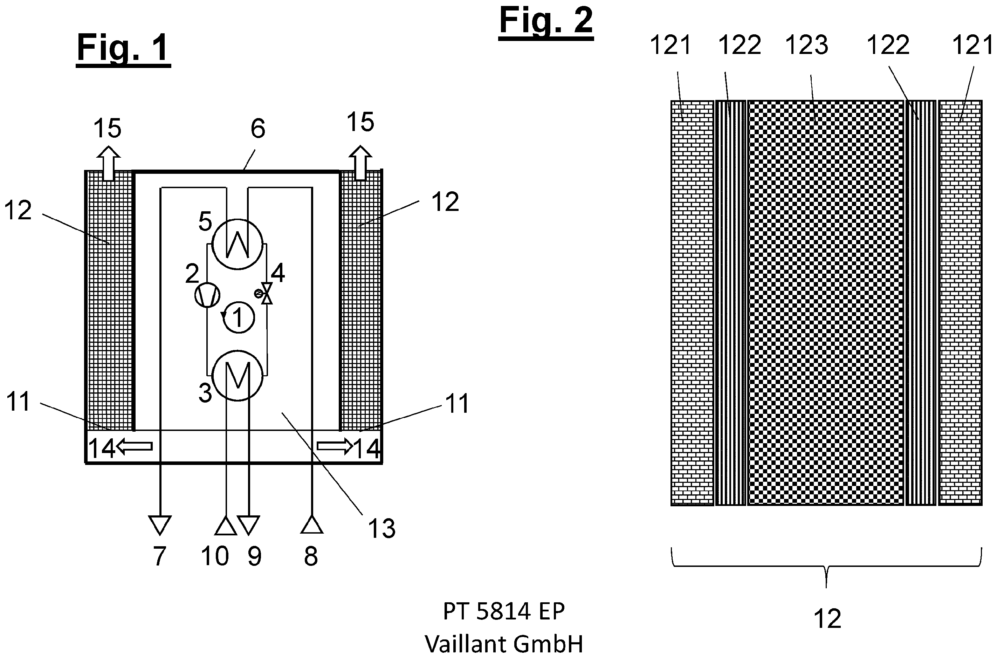

Fig. 1 zeigt eine Wärmepumpe mit Außen-Adsorber anhand einer Prinzipskizze eines Kältekreises 1 mit einem Verdichter 2, einem Kondensator 3, einer Druckreduzierung 4 und einem Verdampfer 5 in einem Gehäuse, welches aus einem inneren Gehäuse 6 und zwei das Gehäuse umgebenden Außen-Adsorbern 12 gebildet ist. Hierbei ist das innere Gehäuse 6 im unteren Bereich zur Seite hin offen und nach oben hin geschlossen, während der Außen-Adsorber 12 nach oben offen ist. Die Wärmepumpe verfügt über einen Wärmequellen-Anschluss 7, einen Wärmequellen-Vorlauf 8, einen Wärmesenken-Vorlauf 9 und einen Wärmesenken-Anschluss 10.

Der Kältekreis 1 wird in diesem Beispiel mit dem entzündlichen Arbeitsfluid Propan, welches auch unter der Bezeichnung R290 bekannt ist, betrieben. Propan ist schwerer als Luft, daher sinkt es im Falle einer Leckage im Kältekreis 1 tendenziell im inneren Gehäuse 6 nach unten, wenngleich es sich bei kleinen Leckagen gut vermischt. Im unteren Bereich des inneren Gehäuses ist daher eine Öffnung mit einem Einströmbereich 14 vorgesehen, durch die ein Luft-Propangemisch aus dem Innenraum 13 zum Außen-Adsorber 12 gelangt und danach zur Austrittsöffnung 15

Fig. 2 zeigt einen erfindungsgemäßen Außen-Adsorber im Seitenschnitt. Falls ein Luft-Propangemisch aus dem Innenraum 13 zum Außen-Adsorber 12 gelangt, tritt es in die Aktivkohleschüttung 123 ein, die dabei das Propan vollständig aufnimmt. Die Aktivkohleschüttung 123 wird auf beiden Seiten von Schwerbodenmatten 122 aus Silikon eingefasst, die wiederum an herkömmlichem Dämmmaterial 121 befestigt sind. Zur Gehäuseseite ist das Dämmmaterial direkt mit dem inneren Gehäuse 6 verbunden, zur Außenseite ist eine Außenwand vorgesehen, an die keine besonderen Anforderungen zu stellen ist.

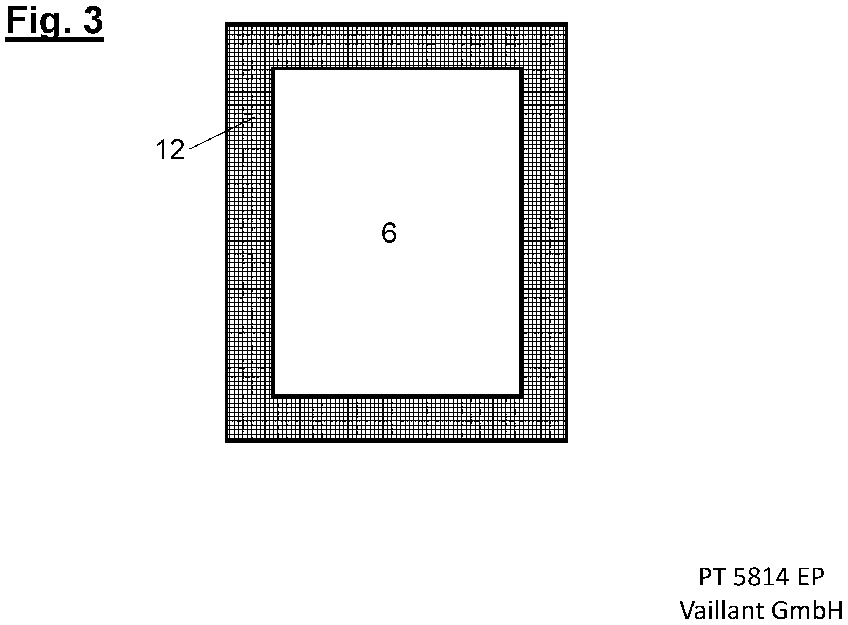

Fig. 3 zeigt eine stark vereinfachte Darstellung einer Draufsicht für eine freistehende Wärmepumpe. Das innere Gehäuseteil 6 ist dabei über den vollen Umfang auf allen 4 Seiten von je einem Außen-Adsorber 12 umgeben, der nach oben offen ist.

### Bezugszeichenliste

- 1: Kältekreis
- 2: Verdichter
- 3: Kondensator
- 4: Druckreduzierung
- 5: Verdampfer
- 6: Inneres Gehäuse
- 7: Wärmequellen-Anschluss
- 8: Wärmequellen-Vorlauf
- 9: Wärmesenken-Vorlauf
- 10: Wärmesenken-Anschluss
- 11: Siebauflage
- 12: Außen-Adsorber
- 13: Innenraum
- 14: Einströmbereich
- 15: Austrittsöffnung
- 121: Schalldämmschicht
- 122: Schwerbodenmatte
- 123: Aktivkohleschüttung

## Patentansprüche

1. Vorrichtung zur sicheren Durchführung eines linksdrehenden thermodynamischen Kreisprozesses (1) mittels eines entzündlichen Arbeitsfluids, welches in einem geschlossenen, hermetisch dichten Arbeitsfluidumlauf geführt wird, aufweisend
- mindestens einen Verdichter (2) für Arbeitsfluid,
- mindestens eine Entspannungseinrichtung (4) für Arbeitsfluid,
- mindestens zwei Wärmeübertrager (3, 5) für Arbeitsfluid mit jeweils mindestens zwei Anschlüssen (7, 8, 9, 10) für Wärmeüberträgerfluide,
- ein inneres Gehäuse (6), welches alle am geschlossenen Arbeitsfluidumlauf angeschlossenen Einrichtungen umfasst und weitere Einrichtungen umfassen kann,
- mindestens einen Außen-Adsorber (12), der direkt an das innere Gehäuse (6) anschließt und mindestens eine Seite des inneren Gehäuses (6) abdeckt und mit ihr verbunden ist,
- der Außen-Adsorber (12) eine unverschließbare Austrittsöffnung (15) für Gas aufweist,
- das innere Gehäuse (6) mindestens eine Öffnung aufweist für Gas sowie im Anschluss an diese Öffnung einen Einströmbereich (14) für Gas in den Außen-Adsorber (12),
wobei
- der Außen-Adsorber (12) sowohl ein Gasadsorbens für durchströmendes, entzündliches Gas mit Arbeitsfluid als auch mindestens ein Schallabsorbens für Körperschall- und Luftschall aufweist,
- der Außen-Adsorber (12) eine Adsorbensschüttung (123) als Gasadsorbens, mindestens eine weiche Schwerbodenmatte (122) als Schüttungsbegrenzung und mindestens eine Schalldämmschicht (121) zum Gehäuse (6) hin aufweist,
- die Adsorbensschüttung (123) auf zwei Seiten je eine weiche Schwerbodenmatte (122) als Schüttungsbegrenzung aufweist,
- die Adsorbensschüttung (123) aus Kugeln oder Pellets gebildet ist und die weiche Schwerbodenmatte (122) so weich ist, dass sich die Kugeln oder Pellets in die Schwerbodenmatte (122) eindrücken können.

2. Vorrichtung nach Anspruch 1, **dadurch gekennzeichnet, dass** die weiche Schwerbodenmatte (122) ein Eindrücken der Kugeln oder Pellets der Adsorbensschüttung (123) von mehr als dem halben Partikeldurchmesser zulässt.

3. Vorrichtung nach einem der Ansprüche 1 oder 2, **dadurch gekennzeichnet, dass** die weiche Schwerbodenmatte (122) aus Silikon besteht.

4. Vorrichtung nach einem der Ansprüche 1 bis 3, **dadurch gekennzeichnet, dass** der Außen-Adsorber (12) mindestens eine Dämmschicht (122) aufweist, deren Resonanzfrequenz der der Hauptschwingung des Verdichters (2) des Kreisprozesses (1) entspricht.

5. Vorrichtung nach einem der Ansprüche 1 bis 4 **dadurch gekennzeichnet, dass** der Außen-Adsorber (12) gebildet wird aus einer ersten Dämmschicht (121), die direkt am inneren Gehäuse (6) anliegt, nachfolgend einer Schwerbodenmatte (122), nachfolgend einer Adsorbensschüttung (123), nachfolgend einer weiteren Schwerbodenmatte (122), nachfolgend einer weiteren Dämmschicht (121) und nachfolgend einer äußeren Gehäusewand.

6. Vorrichtung nach einem der Ansprüche 1 bis 5, **dadurch gekennzeichnet, dass** an mindestens 2 Seiten des inneren Gehäuses (6) jeweils ein Außen-Adsorber (12) vorgesehen wird.

7. Vorrichtung nach Anspruch 6, **dadurch gekennzeichnet, dass** an mindestens 3 Seiten des inneren Gehäuses (6) jeweils ein Außen-Adsorber (12) vorgesehen wird.

8. Vorrichtung nach Anspruch 6, **dadurch gekennzeichnet, dass** an allen Seiten des inneren Gehäuses (6) jeweils ein Außen-Adsorber (12) vorgesehen wird.

9. Vorrichtung nach einem der Ansprüche 1 bis 8, **dadurch gekennzeichnet, dass** der Einströmbereich (14) des Außen-Adsorbers (12) unten im inneren Gehäuse (6) angeordnet und die Adsorbensschüttung (123) durch ein Sieb (11) gehalten wird.

10. Vorrichtung nach einem der Ansprüche 1 bis 8, **dadurch gekennzeichnet, dass** der Einströmbereich des Außen-Adsorbers (12) oben im inneren Gehäuse (6) angeordnet und die Adsorbensschüttung (123) durch ein Sieb (11) gehalten wird.

11. Vorrichtung nach einem der Ansprüche 1 bis 10, **dadurch gekennzeichnet, dass** die Adsorbensschüttung (123) für Gas aus Aktivkohle besteht.

12. Vorrichtung nach einem der Ansprüche 1 bis 11, **dadurch gekennzeichnet, dass** die Kugeln oder Pellets der Adsorbensschüttung (123) einen Durchmesserbereich von 0,5 bis 10 Millimeter und ein Länge-zu-Durchmesserverhältnis von 1 bis 20 aufweisen.

## Claims

1. Device for the safe performance of a counterclockwise thermodynamic cycle (1) by means of an ignitable working fluid which is guided in a closed, hermetically sealed working fluid circuit, comprising
- at least one compressor (2) for working fluid,
- at least one expansion device (4) for working fluid,
- at least two heat exchangers (3, 5) for working fluid, each with at least two connections (7, 8, 9, 10) for heat transfer fluids,
- an inner housing (6), which includes all devices connected to the closed working fluid circulation and can include further devices,
- at least one outer adsorber (12), which is directly connected to the inner housing (6) and covers at least one side of the inner housing (6) and is connected to it
- the external adsorber (12) has a non-closable outlet opening (15) for gas,
- the inner housing (6) has at least one opening for gas and, adjacent to this opening, an inflow area (14) for gas into the outer adsorber (12),
whereby
- the external adsorber (12) has both a gas adsorber for flammable gas flowing through with working fluid and at least one sound absorber for structure-borne and airborne sound,
- the external adsorber (12) has an adsorbent bed (123) as a gas adsorbent, at least one soft heavy-bottom mat (122) as a bed boundary and at least one sound-insulating layer (121) towards the housing (6),
- the adsorbent bed (123) has a soft heavy soil mat (122) on each of two sides as a bed boundary,
- the adsorbent bed (123) is formed from spheres or pellets and the soft heavy-bottom mat (122) is so soft that the spheres or pellets can be pressed into the heavy-bottom mat (122).

2. Device according to claim 1, **characterised in that** the soft heavy-bottom mat (122) allows the balls or pellets of the adsorbent bed (123) to be pressed in by more than half the particle diameter.

3. The device according to any one of claims 1 or 2, **characterised in that** the soft heavy bottom mat (122) is made of silicone.

4. Device according to one of claims 1 to 3, **characterised in that** the external adsorber (12) has at least one insulating layer (122) whose resonant frequency corresponds to that of the main oscillation of the compressor (2) of the cyclic process (1).

5. Device according to one of claims 1 to 4, **characterised in that** the outer adsorber (12) is formed from a first insulating layer (121), which lies directly against the inner housing (6), followed by a heavy-bottom mat (122), followed by an adsorbent fill (123), followed by a further heavy-bottom mat (122), followed by a further insulating layer (121) and followed by an outer housing wall.

6. Device according to one of claims 1 to 5, **characterised in that** an outer adsorber (12) is provided on each of at least 2 sides of the inner housing (6).

7. Device according to claim 6, **characterised in that** an outer adsorber (12) is provided on each of at least 3 sides of the inner housing (6).

8. Device according to claim 6, **characterised in that** an outer adsorber (12) is provided on all sides of the inner housing (6).

9. Device according to one of claims 1 to 8, **characterised in that** the inflow region (14) of the outer adsorber (12) is arranged at the bottom of the inner housing (6) and the adsorbent bed (123) is held by a sieve (11).

10. Device according to one of claims 1 to 8, **characterised in that** the inflow region of the outer adsorber (12) is arranged at the top in the inner housing (6) and the adsorbent bed (123) is held by a sieve (11).

11. Device according to one of claims 1 to 10, **characterised in that** the adsorbent bed (123) for gas consists of activated carbon.

12. Device according to one of claims 1 to 11, **characterised in that** the spheres or pellets of the adsorbent bed (123) have a diameter range of 0.5 to 10 millimetres and a lengthto-diameter ratio of 1 to 20.

## Revendications

1. Dispositif destiné à la mise en œuvre sûre d'un processus à cycle thermodynamique (1) tournant à gauche au moyen d'un fluide de travail inflammable qui est guidé dans un circuit de fluide de travail fermé et hermétiquement étanche, présentant
- au moins un compresseur (2) pour un fluide de travail,
- au moins un équipement de détente (4) pour un fluide de travail,
- au moins deux échangeurs de chaleur (3, 5) pour un fluide de travail avec respectivement au moins deux raccords (7, 8, 9, 10) pour des fluides d'échangeur de chaleur,
- un boîtier intérieur (6) qui comprend tous les équipements raccordés au niveau de la circulation de fluide de travail fermé et qui peut comprendre d'autres équipements,
- au moins un adsorbeur extérieur (12) qui se raccorde directement à au boîtier intérieur (6) et recouvre au moins un côté du boîtier intérieur (6) et y est connecté,
- l'adsorbeur extérieur (12) présente une ouverture de sortie (15) pour du gaz ne pouvant pas être fermée,
- le boîtier intérieur (6) présente au moins une ouverture pour du gaz ainsi que, suite à cette ouverture, une zone d'admission (14) pour du gaz dans l'adsorbeur extérieur (12), dans lequel
- l'adsorbeur extérieur (12) présente à la fois un adsorbant de gaz pour du gaz inflammable traversant avec du fluide de travail ainsi qu'au moins un adsorbant de bruit pour bruits de structure et aériens,
- l'adsorbeur extérieur (12) présente un lit d'adsorbant (123) en tant qu'adsorbant de gaz,
au moins un tapis de sol lourd souple (122) en tant que limitation de lit et au moins une couche d'insonorisation (121) vers le boîtier (6),
- le lit d'adsorbant (123) présente sur deux côtés respectivement un tapis de sol lourd souple (122) en tant que limitation de lit,
- le lit d'adsorbant (123) est formé de billes ou pellets, et le tapis de sol lourd souple (122) est si souple que les billes ou pellets peuvent s'enfoncer dans le tapis de sol lourd souple (122).

2. Dispositif selon la revendication 1, **caractérisé en ce que** le tapis de sol lourd souple (122) permet d'enfoncer les billes ou pellets du lit d'adsorbant (123) de plus de la moitié du diamètre de particule.

3. Dispositif selon l'une quelconque des revendications 1 ou 2, **caractérisé en ce que** le tapis de sol lourd souple (122) est constitué de silicone.

4. Dispositif selon l'une quelconque des revendications 1 à 3, **caractérisé en ce que** l'adsorbeur extérieur (12) présente au moins une couche isolante (122) dont la fréquence de résonance correspond à celle de l'oscillation principale du compresseur (2) du processus à cycle (1).

5. Dispositif selon l'une quelconque des revendications 1 à 4, **caractérisé en ce que** l'adsorbeur extérieur (12) est formé d'une première couche isolante (121) qui repose directement contre le boîtier intérieur (6), puis d'un tapis de sol lourd (122), puis d'un lit d'adsorbant (123), puis d'un tapis de sol lourd (122) supplémentaire, puis d'une couche isolante (121) supplémentaire, puis d'une paroi de boîtier extérieure.

6. Dispositif selon l'une quelconque des revendications 1 à 5, **caractérisé en ce que** respectivement un adsorbant extérieur (12) est prévu sur au moins deux côtés du boîtier intérieur (6).

7. Dispositif selon la revendication 6, **caractérisé en ce que** respectivement un adsorbant extérieur (12) est prévu sur au moins trois côtés du boîtier intérieur (6).

8. Dispositif selon la revendication 6, **caractérisé en ce que** respectivement un adsorbant extérieur (12) est prévu sur tous les côtés du boîtier intérieur (6).

9. Dispositif selon l'une quelconque des revendications 1 à 8, **caractérisé en ce que** la zone d'admission (14) de l'adsorbeur extérieur (12) est disposée en bas dans le boîtier intérieur (6), et le lit d'adsorbant (123) est maintenu par un tamis (11).

10. Dispositif selon l'une quelconque des revendications 1 à 8, **caractérisé en ce que** la zone d'admission de l'adsorbeur extérieur (12) est disposée en haut dans le boîtier intérieur (6), et le lit d'adsorbant (123) est maintenu par un tamis (11).

11. Dispositif selon l'une quelconque des revendications 1 à 10, **caractérisé en ce que** le lit d'adsorbant (123) pour du gaz est constitué de charbon actif.

12. Dispositif selon l'une quelconque des revendications 1 à 11, **caractérisé en ce que** les billes ou pellets du lit d'adsorbant (123) présentent une plage de diamètres entre 0,5 et 10 millimètres et un rapport longueur/diamètre entre 1 et 20.
